# EUROPÄISCHE PATENTSCHRIFT

(11) **EP 1 902 226 B1**
(45) Veröffentlichungstag und Bekanntmachung des Hinweises auf die Patenterteilung: **28.09.2016**
(21) Anmeldenummer: 06753290.3
(22) Anmeldetag: 27.06.2006
(51) Int. Cl.: F16D 13/68, F16F 15/12, F16D 13/75, F16D 21/06

(54) **KUPPLUNGSAGGREGAT**
CLUTCH UNIT
UNITE D'ACCOUPLEMENT

(30) Priorität: 28.06.2005 DE 102005030503; 28.06.2005 DE 102005030504; 13.06.2006 DE 102006027641
(43) Veröffentlichungstag der Anmeldung: 26.03.2008
(73) Patentinhaber: Schaeffler Technologies AG & Co. KG, 91074 Herzogenaurach (DE)
(72) Erfinder: ZÜFLE, Markus, 76437 Rastatt (DE); ZHOU, Bin, 77815 Bühl (DE)
(86) Internationale Anmeldenummer: PCT/DE2006/001100
(87) Internationale Veröffentlichungsnummer: WO 2007/000151

(56) Entgegenhaltungen:
- EP-A1- 0 223 442
- EP-A2- 0 328 381
- EP-A2- 0 797 015
- DE-A1- 3 616 301
- JP-A- 59 159 431
- US-A- 2 053 849

## Beschreibung

Die Erfindung betrifft ein Kupplungsaggregat bzw. ein Kupplungssystem, das aus wenigstens zwei Untereinheiten besteht, wobei die eine Untereinheit mit der Abtriebswelle eines Motors verbindbar und die andere Untereinheit getriebeseitig vormontierbar ist und beide Untereinheiten über eine axiale Steckverbindung, die ineinander greifende Profilierungen und Gegenprofilierungen umfasst, miteinander koppelbar sind.

Kupplungsaggregate, die in zwei Untereinheiten aufgeteilt sind und erst beim Zusammenbau von Getriebe und Motor antriebsmäßig miteinander gekoppelt werden, sind beispielsweise durch die DE 10 2005 037514 A1 sowie die DE 10 2005 027608 A1 vorgeschlagen worden.

Aus der JP-A-59-159431 ist eine gedämpfte Kupplungsscheibe bekannt, welche einen dämpferseitigen Ausgangsflansch mit Innenverzahnung und eine stromab des Ausgangsflansches angeordnete, mit Außenverzahnung ausgebildete Hülse aufweist. Innenverzahnung und Außenverzahnung bilden eine axiale Steckverzahnung, wobei in Umfangsrichtung in der Steckverzahnung an mehreren Stellen über den Umfang verteilt Federelemente angeordnet sind. Diese Federelemente verspannen die Innenverzahnung und die Außenverzahnung gegeneinander.

Aus der EP 0 223 442 A1 ist eine bedämpfte Kupplungsscheibe bekannt, welche einen Ausgangsflansch aufweist, der über eine Steckverzahnung mit einer Getriebeeingangswelle verbunden ist. Zur Vermeidung von Verzahnungsklappern ist ein verdrehbarer Stab und eine in Umfangsrichtung angeordnete Feder in der Verzahnung vorgesehen.

Aus der US 2,053,849 ist eine Kupplungsscheibe bekannt, welche ein ringförmiges Bauteil aufweist, welches radial erstreckte Zungen aufweist, welche in eine Hülse mit Außenverzahnung eingreifen, welche wiederum mit der Getriebeeingangswelle in Eingriff steht. Diese Zungen verspannung die Verzahnung zwischen Hülse und Welle in Umfangsrichtung.

Der vorliegenden Erfindung lag die Aufgabe zugrunde, zwischen den beiden Untereinheiten eine Verbindung zu schaffen, die eine einwandfreie Drehmomentübertragung gewährleistet und durch einfaches axiales Zusammenfügen der beiden Untereinheiten herstellbar ist. Durch die erfindungsgemäße Verbindung sollen Anschlags- bzw. Klappergeräusche, insbesondere aufgrund von Torsionsschwingungen, Taumelschwingungen sowie Axialschwingungen von Bauteilen vermieden werden.

Gemäß der Erfindung wird dies unter anderem dadurch erzielt, dass zumindest einzelne der die Profilierungen und Gegenprofilierungen bildenden zahnförmigen Profile mittels eines Verspannungselementes in Umfangsrichtung verspannt sind, wobei das Verspannungselement zumindest einzelne Profilierungen aufweist und von einem der die Profilierungen oder Gegenprofilierungen der Steckverbindung bildenden Bauteile mittelbar oder unmittelbar getragen und gegenüber diesem in Umfangsrichtung mittels zumindest eines Energiespeichers verspannt ist und weiterhin mit seinen Profilierungen in Profilierungen oder Gegeriprofilierungen des Bauteiles eingreift, von dem es nicht getragen ist, wobei zumindest nach Herstellung der axialen Steckverbindung die Profilierungen des Verspannungselementes und die Profilierungen oder Gegenprofilierungen des dieses tragenden Bauteiles in Umfangsrichtung entgegengerichtet verspannt sind. Durch eine solche in Umfangsrichtung entgegengerichtete Verspannung wird zumindest in eine Relativverdrehrichtung zwischen den beiden Untereinheiten eine Verspannung innerhalb der axialen Steckverbindung gewährleistet. Diese Verspannung kann in vorteilhafter Weise derart erfolgen, dass die Profilierungen und Gegenprofilierungen in Zugrichtung verspannt werden, also die bei Zugbetrieb die Drehmomentübertragung übernehmenden Flanken der Profilierungen und Gegenprofilierungen aneinander liegen. Für manche Anwendungsfälle kann es jedoch auch zweckmäßig sein, wenn die Verspannung derart erfolgt, dass die Profilierungen und Gegenprofilierungen in Schubrichtung verspannt sind. Unter Zugbetrieb bzw. Zugrichtung ist der Betriebszustand eines Kraftfahrzeuges zu verstehen, bei dem der Motor das Kraftfahrzeug antreibt, also der Motor ein Drehmoment in das Getriebe einleitet. Bei Schubbetrieb wird das Kraftfahrzeug durch den Motor abgebremst bzw. es findet eine Drehmomenteinleitung in den Motor mittels der Antriebsräder statt.

Obwohl die getriebeseitig vormontierbare Untereinheit lediglich eine Einfachkupplung aufweisen kann, ist es für viele Anwendungsfälle besonders zweckmäßig, wenn diese Untereinheit eine Doppelkupplung umfasst. Die beiden Kupplungen können dabei eine gemeinsame Zwischendruckplatte aufweisen, also axial beidseits einer solchen Zwischendruckplatte angeordnet sein. Eine solche Zwischendruckplatte kann in vorteilhafter Weise auf einer Getriebeeingangswelle zentriert gelagert sein.

Die motorseitige Untereinheit kann in vorteilhafter Weise einen Drehschwingungsdämpfer umfassen.

Die eine winkelmäßige Positionierung der Profilierungen und Gegenprofilierungen gewährleistenden Federmittel können eine Verdrehsteifigkeit erzeugen, die in der Größenordnung zwischen 10 und 60 Nm/° liegen kann. Für manche Anwendungsfälle kann es auch zweckmäßig sein, wenn diese Verdrehsteifigkeit größer ausgelegt ist.

Das Verspannungselement kann in vorteilhafter Weise ringartig ausgebildet sein und lediglich einzelne, über den Umfang verteilte Profilierungen aufweisen. Besonders zweckmäßig kann es sein, wenn das Verspannungselement mehrere Gruppen von Profilierungen aufweist, die vorzugsweise gleichmäßig über den Umfang verteilt sind. Die Profilierungen des Verspannungselementes können in einfacher Weise als zahnartige Anformungen bzw. laschenartige Vorsprünge ausgebildet sein. Zur Herstellung der axialen Steckverbindung kann es besonders zweckmäßig sein, wenn das Verspannungselement und das dieses mittelbar oder unmittelbar tragende Bauteil, welches Profilierungen oder Gegenprofilierungen aufweist, vor Herstellung der Steckverbindung zumindest mittels eines Verriegelungselementes entgegen der Wirkung des zumindest einen Energiespeichers in einer definierten winkelmäßigen Lage gehalten sind, die eine praktisch kraftfreie Herstellung der axialen Steckverbindung durch axiales Zusammenfügen der Profilierungen und Gegenprofilierungen ermöglicht. In vorteilhafter Weise kann das wenigstens eine Verriegelungselement einstückig mit dem Verspannungselement ausgebildet sein. Ein solches Verriegelungselement kann beispielsweise durch wenigstens eine in Umfangsrichtung sich erstreckende, längliche Zunge gebildet sein, die ein axial verlagerbares Ende aufweist, das sich an einem Abstützbereich eines das Verspannungselement tragenden Bauteiles abstützt. Der Abstützbereich kann dabei durch eine Zahnflanke einer Profilierung oder Gegenprofilierung gebildet sein. Ein solcher Abstützbereich kann jedoch auch außerhalb der Profilierungen oder Gegenprofilierungen vorgesehen werden.

Anhand der Figuren sei die Erfindung näher erläutert.

Dabei zeigen:
- Figur 1: einen Halbschnitt durch ein Kupplungsaggregat,
- Figur 2: eine vergrößerte Darstellung der bei Figur 1 vorhandenen Steckverbindung,
- Figur 3: die Bauteileanordnung mittels der die Verspannung zwischen den Profilierungen und Gegenprofilierungen realisierbar ist,
- Figuren 4 und 5: Einzelheiten der Bauteileanordnung gemäß Figur 3,
- Figuren 6 und 7: eine Ausführungsvariante der in Figur 4 und 5 gezeigten Einzelheiten.

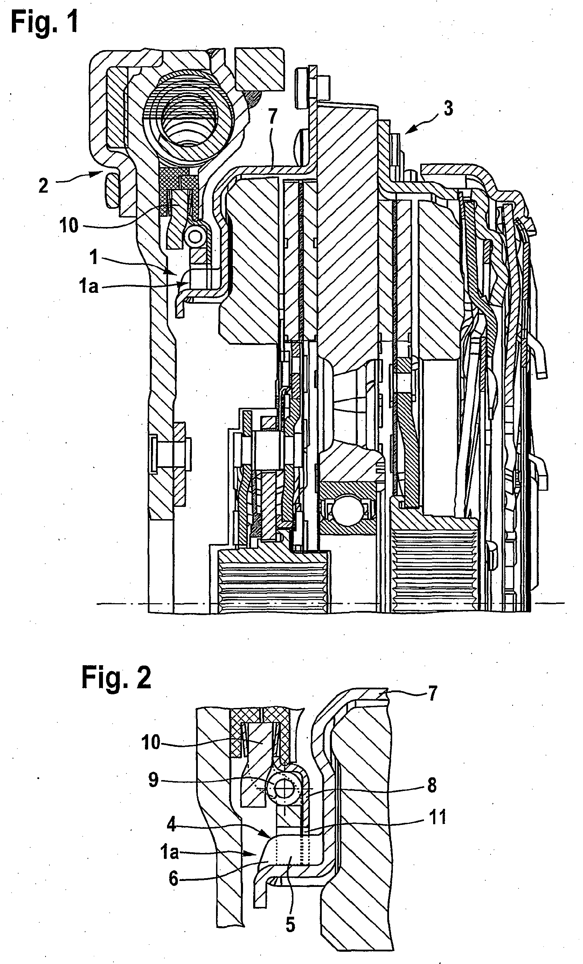

In Figur 1 ist eine Antriebsverbindung 1 erkennbar, die als axiale Steckverbindung 1a ausgebildet ist. Über diese axiale Steckverbindung 1a sind zwei Untereinheiten 2 und 3 miteinander verbindbar, von denen die Untereinheit 2 einen Dämpfer bildet, der mit der Abtriebswelle einer Brennkraftmaschine verbindbar ist, und die Untereinheit 3 bei dem dargestellten Ausführungsbeispiel eine Doppelkupplung beinhaltet, die getriebeseitig vormontierbar ist.

Die axiale Steckverbindung 1a ist, wie in Zusammenhang mit Figur 2 erkennbar, durch eine Verzahnungsverbindung 4 gebildet, welche Verzahnungsprofile 5 und 6 aufweist, die ineinander greifen. Die Verzahnungsprofile 5 sind bei dem dargestellten Ausführungsbeispiel von einem flanschartigen Ausgangsteil 10 des Dämpfers 2 getragen und die Verzahnungsprofile 6 von einem Mitnehmerring 7, der Bestandteil der getriebeseitig vormontierten Untereinheit 3 ist. Die Verzahnungsprofile 5 bilden eine Innenverzahnung, wohingegen die Verzahnungsprofile 6 eine entsprechend angepasste Außenverzahnung bilden.

Um eine umfangsmäßige Verspannung der Verzahnungsprofile 5 und 6 zu gewährleisten, ist ein Verspannungselement 8 vorgesehen, das in Umfangsrichtung durch wenigstens einen Energiespeicher 9, der hier als Schraubendruckfeder ausgebildet ist, beaufschlagt wird. Der Energiespeicher 9 kann jedoch auch anders ausgebildet sein, beispielsweise könnte das hier ringförmig ausgebildete Verspannungselement 8 biegebalkenähnliche Arme aufweisen, die elastisch vorgespannt sind und eine Umfangskraft zumindest auf das Verspannungselement 8 erzeugen. Derartige Arme können mit entsprechender Vorspannung an dem Bauteil 10 abgestützt werden. Der Energiespeicher 9 ist zwischen den Bauteilen 10 und 8 in Umfangsrichtung verspannt verbaut.

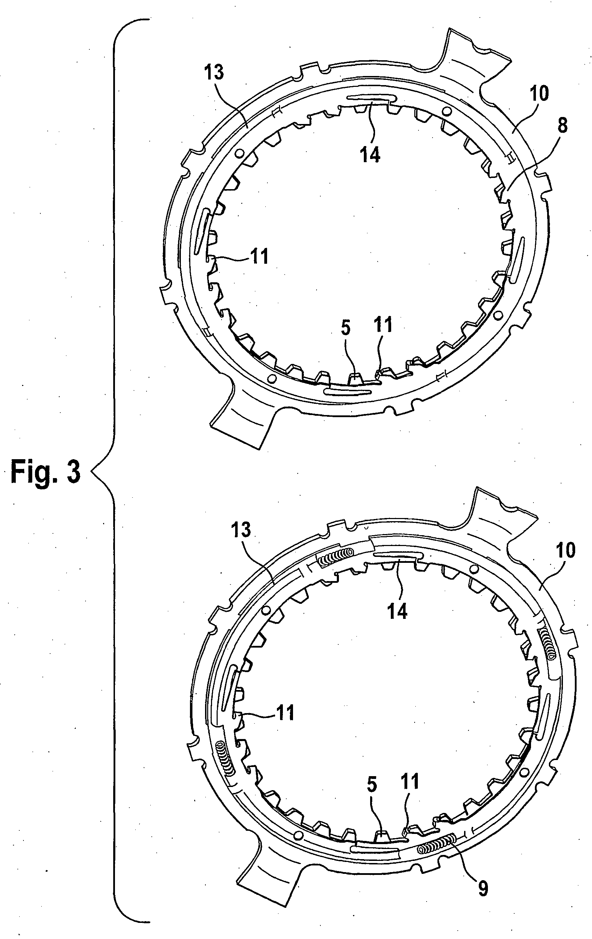

Das Verspannungselement 8 bildet bzw. trägt, wie dies insbesondere aus den Figuren 3 bis 5 entnehmbar ist, zumindest einzelne Profilierungen bzw. Bereiche 11, die geeignet sind, mit Profilen bzw. Zähnen des Verzahnungsprofiles 6 zusammenzuwirken, indem sie mit Vorspannung an Flanken derartiger Profile bzw. Zähne zur Anlage kommen.

Bei dem dargestellten Ausführungsbeispiel bilden die Bereiche 11 zunächst axial verlaufende Abschnitte 12, die ausgehen von dem ringförmigen Grundkörper 13 des Verspannungselementes 8. Auf der dem Grundkörper 13 abgewandten Seite des die Verzahnungsprofile 5 aufweisenden Bauteils 10 gehen die Abschnitte 12 in eine in Umfangsrichtung verlaufende Lasche 13 über. Die Laschen 13 gewährleisten einen axialen Zusammenhalt zwischen den beiden Bauteilen 8 und 10.

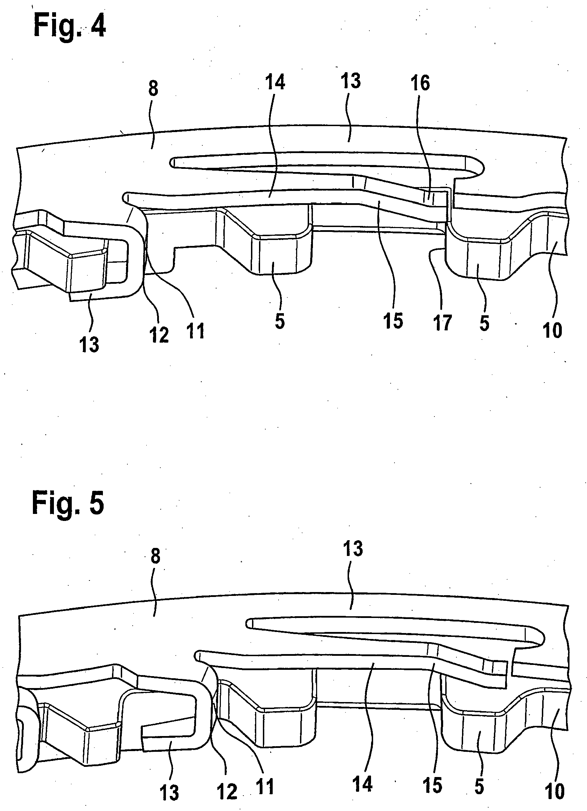

Das Verspannungselement 8 ist vor und während der Bildung der Steckverbindung 1a entgegen der zum Beispiel mittels Energiespeichern 9 erzeugten umfangsmäßigen Verspannkraft in einer winkelmäßig zurückgezogenen Lage gegenüber den Verzahnungsprofilen 5 gesichert. Diese zurückgezogene Lage gewährleistet, dass die Verzahnungsprofile 5 und 6, welche die Antriebsverbindung 1 bilden, frei axial ineinander geschoben werden können. Wie aus den Figuren 4 und 5 ersichtlich ist, wird diese winkelmäßig zurückgezogene Lage des Verspannungselementes 8 mittels zumindest eines Verriegelungselementes bzw. eines Verriegelungsbereiches 14 gewährleistet. Der Verriegelungsbereich 14 ist bei dem dargestellten Ausführungsbeispiel durch eine axial verformbare, vorzugsweise elastisch ausgebildete Zunge 15 gebildet, die hier einstückig mit dem ringförmigen Verspannungselement 8 ausgebildet ist und sich zumindest im Wesentlichen in Umfangsrichtung erstreckt. Vor und während der Montage der durch eine Steckverbindung 1a gebildeten Antriebsverbindung 1 stützt sich das freie Ende 16 der Zungen 15 an dem Bauteil 10 ab und zwar bei dem dargestellten Ausführungsbeispiel an einer Seitenflanke 17 eines Verzahnungsprofils 5. Es kann jedoch auch zumindest ein spezieller Abstützbereich für die Zunge 15 am Bauteil 10 vorgesehen werden.

Während oder erst nach der Bildung der Antriebsverbindung 1 wird der Verriegelungsbereich 14 bzw. die Zunge 15 in eine Lage gedrängt oder aber aufgrund einer Eigenelastizität in eine Lage zurückgefedert, die bewirkt, dass das Verriegelungselement 8 infolge der Vorspannung der Energiespeicher 9 verdreht wird gegenüber dem Bauteil 10. Aufgrund dieser Verdrehung kommen die Bereiche 11 bzw. die axialen Abschnitte 12 dieser Bereiche an einer Flanke einer Profilierung 6 zur Anlage und infolge dessen werden die Verzahnungsprofile 5 und 6 umfangsmäßig verspannt. Die Aufhebung der in Figur 4 noch vorhandenen Verriegelung zwischen den beiden Bauteilen 8 und 10 kann in vorteilhafter Weise nach der Montage bzw. der Bildung der Antriebsverbindung 1 erfolgen. Dies kann durch die Inbetriebnahme der Brennkraftmaschine, welche Drehmomentschwingungen auf das Kupplungsaggregat überträgt, bewirkt werden. Die durch Momentenschwankungen erzeugten Drehschwingungen bewirken, dass die Abschnitte 12 entgegen der Vorspannung der wenigstens einen Feder 9 gegenüber dem Bauteil 10 zumindest geringfügig verdreht werden, wodurch die umfangsmäßige Abstützung bzw. Verriegelung zwischen dem freien Ende 16 der Zunge 15 und der Flanke 17 eines Verzahnungsprofils 5 verringert bzw. aufgehoben wird. Dadurch kann die axial federnde Zunge 15 in eine Entriegelungsposition zurückfedern, welche in Figur 5 dargestellt ist.

Die ineinander greifenden Verzahnungsprofile 5, 6 bzw. die Bauteile 8 und 10 können jedoch auch derart ausgebildet werden, dass beim axialen Zusammenfügen der beiden Untereinheiten 2 und 3 die Zungen 15 zwangsweise in die in Figur 5 dargestellte Position gedrängt werden. Bei einer derartigen Ausgestaltung kann dann die Zunge 15 auch eine unverspannte Lage besitzen, die der Figur 4 entspricht, und während der Bildung der Antriebsverbindung 1 bzw. der Steckverbindung in die in Figur 5 gezeigte axiale Lage gedrängt werden.

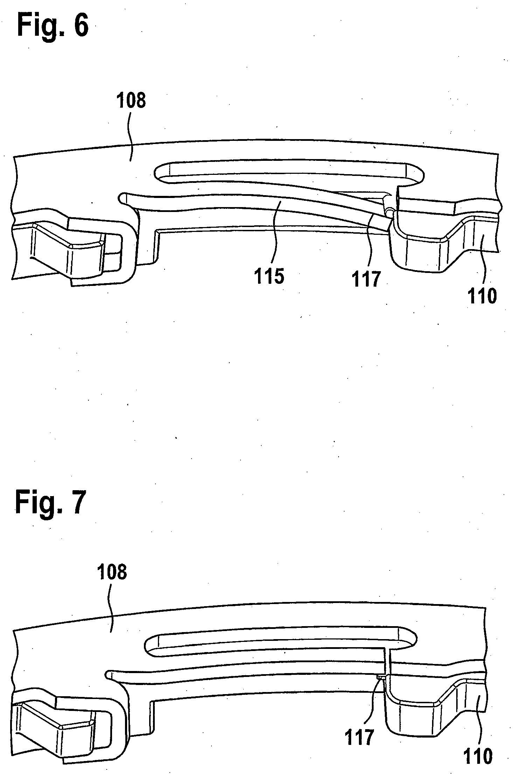

Sofern die Entriegelung zwischen den beiden Bauteilen 8 und 10 erst durch Inbetriebnahme der Brennkraftmaschine bzw. des Motors erfolgt, kann es zweckmäßig sein, wenn, wie dies in den Figuren 6 und 7 dargestellt ist, ein Rückhaltebereich 117 bzw. ein axialer Abstützbereich 117 vorgesehen wird, der die entsprechend federnd vorgespannte Zunge 115 zurückhält. Dadurch wird gewährleistet, dass auch während des Transportes eine Entriegelung des verspannten Zustandes zwischen den beiden Bauteilen 108 und 110 zum Beispiel aufgrund von Erschütterungen oder äußeren Einwirkungen sicher vermieden wird. Erst bei einer entsprechenden Verdrehung des Bauteiles 108 gegenüber dem Bauteil 110 gibt die Abstütznase 117 die axial federnd verspannte Zunge 115 frei, so dass diese die in Figur 7 dargestellte Position einnehmen kann. In dieser Position ist die Arretierung bzw. Verriegelung zwischen den beiden Bauteilen 108 und 110 aufgehoben, so dass das durch die Energiespeicher 8 erzeugte Verspannmoment eine umfangsmäßige Verspannung der Verzahnungsverbindung 1 bzw. der Verzahnungsprofile 5 und 6 bewirkt.

### Bezugszeichenliste

- 1: Antriebsverbindung
- 1a: Steckverbindung
- 2: Untereinheit
- 3: Untereinheit
- 4: Verzahnungsverbindung
- 5: Verzahnungsprofile
- 6: Verzahnungsprofile
- 7: Mitnehmerring
- 8: Verspannungselement
- 9: Energiespeicher
- 10: Ausgangsteil
- 11: Profilierungen bzw. Bereiche
- 12: axial verlaufende Abschnitte
- 13: ringförmiger Grundkörper
- 14: Verriegelungselement
- 15: elastisch ausgebildete Zunge
- 16: freies Ende
- 17: Flanke

- 108: Bauteil
- 110: Bauteil
- 115: Zunge
- 117: axialer Abstützbereich

## Patentansprüche

1. Kupplungsaggregat das aus wenigstens zwei Untereinheiten (2, 3) besteht, wobei die eine Untereinheit (2) mit der Abtriebswelle eines Motors verbindbar und die andere Untereinheit (3) getriebeseitig vormontierbar ist und beide Untereinheiten (2, 3) über eine axiale Steckverbindung (1a), die ineinander greifende Profilierungen und Gegenprofilierungen (5, 6) umfasst, miteinander koppelbar sind, **dadurch gekennzeichnet, dass** zumindest einzelne der die Profilierungen und Gegenprofilierungen (5, 6) bildenden zahnförmigen Profile mittels eines Verspannungselementes (8) in Umfangsrichtung verspannt sind, wobei das Verspannungselement (8) zumindest einzelne Pröfilierungen (11) aufweist und von einem der die Profilierungen oder Gegenprofilierungen (5, 6) der Steckverbindung (1a) bildenden Bauteile (7, 10) getragen ist und gegenüber diesem in Umfangsrichtung mittels zumindest eines Energiespeichers (9) verspannt ist und weiterhin mit seinen Profilierungen (11) in Profilierungen oder Gegenprofilierungen (5, 6) des Bauteiles (7, 10) eingreift, von dem es nicht getragen ist, wobei zumindest nach Herstellung der axialen Steckverbindung (1a) die Profilierungen (11) des Verspannungselementes (8) und die Profilierungen oder Gegenprofilierungen (5, 6) des dieses tragenden Bauteiles (7, 10) in Umfangsrichtung entgegengerichtet verspannt sind.

2. Kupplungsaggregat nach Anspruch 1, **dadurch gekennzeichnet, dass** die getriebeseitige Untereinheit (3) eine Doppelkupplung umfasst und auf einer Getriebeeingangswelle zentriert gelagert ist.

3. Kupplungsaggregat nach Anspruch 1 oder 2, **dadurch gekennzeichnet, dass** die motorseitige Untereinheit (2) einen Drehschwingungsdämpfer umfasst.

4. Kupplungsaggregat nach einem der Ansprüche 1 bis 3, **dadurch gekennzeichnet, dass** der Energiespeicher (9) als Federmittel ausgebildet ist, wobei die Federmittel (9) innerhalb der axialen Steckverbindung (1a) eine Verspannung erzeugen, die eine Verdrehsteifigkeit in der Größenordnung zwischen 10 und 60 Nm/° erzeugt.

5. Kupplungsaggregat nach einem der Ansprüche 1 bis 4, **dadurch gekennzeichnet, dass** das Verspannungselement (8) ringartig ausgebildet ist und mehrere Gruppen von Profilierungen (11) über den Umfang verteilt aufweist.

6. Kupplungsaggregat nach Anspruch 5, **dadurch gekennzeichnet, dass** die Gruppen von Profilierungen (11) mehrere zahnartige oder laschenartige Vorsprünge (12, 13) bilden.

7. Kupplungsaggregat nach einem der Ansprüche 1 bis 6, **dadurch gekennzeichnet, dass** das Verspannungselement (8) und das dieses tragende Bauteil (7, 10), welches Profilierungen oder Gegenprofilierungen (5, 6) aufweist, vor Herstellung der Steckverbindung (1a) zumindest mittels eines Verriegelungselementes (14) entgegen der Wirkung des zumindest einen Energiespeichers (9) in einer definierten, winkelmäßigen Lage gehalten sind, die eine praktisch kraftfreie Herstellung der axialen Steckverbindung (1a) durch axiales Zusammenfügen der Profilierungen und Gegenprofilierungen (5, 6) ermöglicht.

8. Kupplungsaggregat nach Anspruch 7, **dadurch gekennzeichnet, dass** das Verriegelungselement (14) einstückig mit dem Verspannungselement (8) ausgebildet ist.

9. Kupplungsaggregat nach Anspruch 7 oder 8, **dadurch gekennzeichnet, dass** das Verriegelungselement (14) wenigstens durch eine in Umfangsrichtung sich erstreckende, längliche Zunge (15) gebildet ist, die ein axial verlagerbares Ende aufweist, das sich an einem Abstützbereich (17) eines das Verspannungselement (8) tragenden Bauteiles (7, 10) abstützt.

10. Kupplungsaggregat nach Anspruch 8, **dadurch gekennzeichnet, dass** der Abstützbereich (17) durch eine Zahnflanke einer Profilierung oder Gegenprofilierung (5, 6) gebildet ist.

## Claims

1. Clutch assembly which is composed of at least two sub-units (2, 3), wherein one sub-unit (2) is connectable to the drive output shaft of an engine and the other sub-unit (3) can be pre-installed on a gearbox, and both sub-units (2, 3) are couplable to one another by way of an axial plug-action connection (1a) which comprises profilings and counterpart profilings (5, 6) which engage into one another, **characterized in that** at least some of the tooth-shaped profiles which form the profilings and counterpart profilings (5, 6) are braced in a circumferential direction by way of a bracing element (8), wherein the bracing element (8) has at least individual profilings (11) and is borne by one of the components (7, 10) which forms the profilings or counterpart profilings (5, 6) of the plug-action connection (1a), and said bracing element is braced relative thereto in the circumferential direction by way of at least one energy store (9) and furthermore engages by way of its profilings (11) into profilings or counterpart profilings (5, 6) of the component (7, 10) that does not bear said bracing element, wherein, at least after the production of the axial plug-action connection (1a), the profilings (11) of the bracing element (8) and the profilings or counterpart profilings (5, 6) of the component (7, 10) that bears said bracing element are braced oppositely in the circumferential direction.

2. Clutch assembly according to Claim 1, **characterized in that** the gearbox-side sub-unit (3) comprises a double clutch and is mounted in centred fashion on a gearbox input shaft.

3. Clutch assembly according to Claim 1 or 2, **characterized in that** the engine-side sub-unit (2) comprises a rotary vibration damper.

4. Clutch assembly according to one of Claims 1 to 3, **characterized in that** the energy store (9) is in the form of a spring means, wherein the spring means (9) generate, within the axial plug-action connection (1a), a bracing action which generates a rotational stiffness in the range between 10 and 60 Nm/°.

5. Clutch assembly according to one of Claims 1 to 4, **characterized in that** the bracing element (8) is of ring-like form and has multiple groups of profilings (11) distributed over the circumference.

6. Clutch assembly according to Claim 5, **characterized in that** the groups of profilings (11) form multiple tooth-like or lug-like projections (12, 13).

7. Clutch assembly according to one of Claims 1 to 6, **characterized in that** the bracing element (8) and the component (7, 10) which bears said bracing element and which has profilings or counterpart profilings (5, 6) are, before the production of the plug-action connection (1a), held in a defined angular position counter to the action of the at least one energy store (9) at least by way of a locking element (14), which position permits practically force-free production of the axial plug-action connection (1a) by axial joining-together of the profilings and counterpart profilings (5, 6).

8. Clutch assembly according to Claim 7, **characterized in that** the locking element (14) is formed in one piece with the bracing element (8).

9. Clutch assembly according to Claim 7 or 8, **characterized in that** the locking element (14) is formed at least by an elongate tongue (15) which extends in the circumferential direction and which has an axially displaceable end which is supported on a support region (17) of a component (7, 10) that bears the bracing element (8).

10. Clutch assembly according to Claim 8, **characterized in that** the support region (17) is formed by a tooth flank of a profiling or counterpart profiling (5, 6).

## Revendications

1. Unité d'accouplement constituée d'au moins deux sous-unités (2, 3), l'une des sous-unités (2) pouvant être connectée à l'arbre de sortie d'un moteur et l'autre sous-unité (3) pouvant être prémontée du côté de la transmission et les deux sous-unités (2, 3) pouvant être accouplées l'une à l'autre par le biais d'une connexion enfichable axiale (1a) qui comprend des profilages et des contre-profilages (5, 6) s'engageant les uns dans les autres, **caractérisée en ce qu'**au moins des profils individuels en forme de dents formant les profilages et les contre-profilages (5, 6) sont serrés dans la direction périphérique au moyen d'un élément de serrage (8), l'élément de serrage (8) présentant au moins des profilages individuels (11) et étant porté par l'un des composants (7, 10) formant les profilages ou les contre-profilages (5, 6) de la connexion enfichable (1a) et étant serré par rapport à celui-ci dans la direction périphérique au moyen d'au moins un accumulateur d'énergie (9) et en outre s'engageant avec ses profilages (11) dans des profilages ou des contre-profilages (5, 6) du composant (7, 10) par lequel il n'est pas porté, les profilages (11) de l'élément de serrage (8) et les profilages ou les contre-profilages (5, 6) du composant (7, 10) portant celui-ci étant serrés dans le sens inverse dans la direction périphérique au moins après la réalisation de la connexion enfichable axiale (1a).

2. Unité d'accouplement selon la revendication 1, **caractérisée en ce que** la sous-unité (3) du côté de la transmission comprend un double embrayage et est supportée de manière centrée sur un arbre d'entrée de transmission.

3. Unité d'accouplement selon la revendication 1 ou 2, **caractérisée en ce que** la sous-unité (2) du côté du moteur comprend un amortisseur d'oscillations de torsion.

4. Unité d'accouplement selon l'une quelconque des revendications 1 à 3, **caractérisée en ce que** l'accumulateur d'énergie (9) est réalisé sous forme de moyens de ressort, les moyens de ressort (9) générant une contrainte de serrage à l'intérieur de la connexion enfichable axiale (1a) qui génère une rigidité en torsion de l'ordre de grandeur de 10 à 60 Nm/°.

5. Unité d'accouplement selon l'une quelconque des revendications 1 à 4, **caractérisée en ce que** l'élément de serrage (8) est réalisé sous forme annulaire et présente plusieurs groupes de profilages (11) répartis sur la périphérie.

6. Unité d'accouplement selon la revendication 5, **caractérisée en ce que** les groupes de profilages (11) forment plusieurs saillies de type dents ou de type pattes (12, 13).

7. Unité d'accouplement selon l'une quelconque des revendications 1 à 6, **caractérisée en ce que** l'élément de serrage (8) et le composant (7, 10) portant celui-ci, qui présente des profilages et des contre-profilages (5, 6), avant la réalisation de la connexion enfichable (1a), sont retenus au moins au moyen d'un élément de verrouillage (14) à l'encontre de l'action de l'au moins un accumulateur d'énergie (9) dans une position angulaire définie, qui permet une réalisation pratiquement sans force de la connexion enfichable axiale (1a) par assemblage axial des profilages et des contre-profilages (5, 6).

8. Unité d'accouplement selon la revendication 7, **caractérisée en ce que** l'élément de verrouillage (14) est réalisé d'une seule pièce avec l'élément de serrage (8).

9. Unité d'accouplement selon la revendication 7 ou 8, **caractérisée en ce que** l'élément de verrouillage (14) est formé au moins par une langue allongée (15) s'étendant dans la direction périphérique qui présente une extrémité déplaçable axialement qui s'appuie sur une région d'appui (17) d'un composant (7, 10) portant l'élément de serrage (8).

10. Unité d'accouplement selon la revendication 8, **caractérisée en ce que** la région d'appui (17) est formée par un flanc de dent d'un profilage ou d'un contre-profilage (5, 6).
